# EUROPÄISCHE PATENTANMELDUNG

(11) **EP 2 439 169 A1**
(43) Veröffentlichungstag der Anmeldung: **11.04.2012**
(21) Anmeldenummer: 11183022.0
(22) Anmeldetag: 28.09.2011
(51) Int. Cl.: B67C 3/28, F16K 11/056, F16K 31/08

(54) **Vorrichtung zum Fördern von Flüssigkeiten**

(30) Priorität: 05.10.2010 DE 102010047365
(71) Anmelder: Krones AG, 93073 Neutraubling (DE)
(72) Erfinder: Roidl, Wolfgang, 93180 Deuerling (DE); Pöschl, Stefan, 93049 Regensburg (DE)
(74) Vertreter: Hannke, Christian

(57) **Zusammenfassung**

Eine Vorrichtung (1) zum Fördern von Flüssigkeiten und insbesondere von Getränken mit einer Zuführleitung (2), welche in Strömungsverbindung mit einem Verteilraum (4) für die Flüssigkeit steht und welche die Flüssigkeit zu dem Verteilraum (4) fördert, mit einer ersten Abführleitung (6), welche in Strömungsverbindung mit dem Verteilraum (4) steht und welche die Flüssigkeit von dem Verteilraum (4) abfördert, mit einer zweiten Abführleitung (8), welche in Strömungsverbindung mit dem Verteilraum (4) steht und welche die Flüssigkeit von dem Verteilraum (4) abfördert. Erfindungsgemäß ist in dem Verteilraum (4) ein Ventilkörper (10) angeordnet, wobei der Ventilkörper (10) ein magnetisierbares Material aufweist und gegenüber dem Verteilraum (4) bewegbar ist, und wobei der Ventilkörper (10) geeignet zum wenigstens teilweise Verschließen wenigstens einer Abführleitung (6, 8) ist und wobei außerhalb des Verteilraums (4) ein magnetisches Element (12) zum Bewegen des Ventilkörpers (10) vorgesehen ist.

## Beschreibung

Die vorliegende Erfindung betrifft das Gebiet der Fülltechnik und insbesondere die Abfüllung von Flüssigkeiten bzw. Getränken in Behältnisse. Aus dem Stand der Technik sind derartige Vorrichtungen zum Abfüllen von Getränken in Behältnisse seit langem bekannt. Dabei ist es üblich, dass diese Vorrichtungen Füllleitungen aufweisen, welche die Flüssigkeit von einem Reservoir zu den Füllelementen fördern. In diesen Zuführleitungen befinden sich oftmals Drosseln, mittels denen die Zuführung der Flüssigkeit regelbar ist. Im Stand der Technik werden hierzu beispielsweise schaltbare Membranventile eingesetzt, um zwei unterschiedliche Füllgeschwindigkeiten zu erreichen. Diese Membranventile haben jedoch den Nachteil, dass die Membrane dem Verschleiß unterliegen und weiterhin die Durchflussmenge begrenzt wird. Genauer gesagt liegt die Lebensdauer derartiger Membranen bei weniger als 6000 Stunden.

Aus der DE 36 00 012 A1 ist eine Vorrichtung zum portionierten Abgeben von feinverteilten mikroskopischen Gut und fluiden Stoffen bekannt. Bei dieser Vorrichtung ist im Weg des Füllguts zu einer Auftragsöffnung ein beweglicher Ventilkörper angeordnet, der aufgrund der an ihm angreifenden Schwerkraft während des Spendevorgangs den Weg des Füllgutes zur Austragsöffnung freigibt und nach Rückkehr zur Austragsöffnung eine Durchtrittsöffnung für das Füllgut verschließt.

Die DE 60 2005 003 195 T2 beschreibt ein Ventil, wobei dieses Ventil als Kugelventil ausgeführt ist, welches eine elektromagnetische Betätigung benutzt.

Aus der DE 10 2007 048 934 A1 ist eine Vorrichtung zum Abfüllen von Getränken bekannt, wobei in einer Transportleitung zwischen einem Aufbewahrungsbehältnis und einer Einfülleinrichtung eine Ventileinrichtung angeordnet ist, welche in Abhängigkeit von einer Strömungsgeschwindigkeit selbsttätig zwischen einem geöffneten und einem geschlossenen Zustand wechselt.

Der vorliegenden Erfindung liegt die Aufgabe zugrunde, die oben genannten Nachteile zu beseitigen und insbesondere eine Drosseleinrichtung mit geringerem Verschleiß zur Verfügung zu stellen. Diese Aufgaben werden durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Fördern von Flüssigkeiten und insbesondere von Getränken weist eine Zuführleitung auf, welche in Strömungsverbindung mit einem Verteilraum für die Flüssigkeit steht, und welche die Flüssigkeit zu dem Verteilraum fördert. Weiterhin weist die Vorrichtung eine erste Abführleitung auf, welche ebenfalls in Strömungsverbindung mit dem Verteilraum steht und welche die Flüssigkeit von dem Verteilraum abfördert. Daneben ist eine zweite Abführleitung vorgesehen, welche in Strömungsverbindung mit dem Verteilraum steht und welche die Flüssigkeit von dem Verteilraum abfördert.

Erfindungsgemäß ist in dem Verteilraum ein Ventilkörper angeordnet, wobei der Ventilkörper ein magnetisierbares Material aufweist und gegenüber dem Verteilraum bewegbar ist und wobei der Ventilkörper geeignet zum wenigstens teilweisen Verschließen wenigstens einer Abführleitung ist, und wobei außerhalb des Verteilraums ein magnetisches Element zum Bewegen des Ventilkörpers vorgesehen ist.

Ausgehend von dem Verteilraum wird daher die Flüssigkeit auf zumindest die erste Abführleitung und die zweite Abführleitung aufgeteilt. Der Verteilraum ist dabei vorteilhaft abgesehen von den besagten Strömungsverbindungen mit der Zu- und der Abführleitung abgeschlossen. Die erfindungsgemäße Vorrichtung erlaubt damit durch entsprechendes Schalten bzw. Bewegen des Ventilkörpers eine Drosselung des Flüssigkeitsstroms, indem beispielsweise eine Abführleitung versperrt wird. Die erfindungsgemäße Vorrichtung ist weitgehend verschleißfrei und auch auf die Bauteile wirken keine erhöhten Belastungen (weder chemisch noch mechanisch). Vorteilhaft besteht der Ventilkörper aus einem magnetisierbaren Material, so dass er von Magneten angezogen bzw. abgestoßen werden kann.

Vorteilhaft handelt es sich damit bei der erfindungsgemäßen Vorrichtung um eine schaltbare Drossel, welche mittels Magnetkraft geschalten werden kann, wobei der Ventilkörper, wie oben erwähnt, wiederum von außen durch einen Magneten gehalten wird. Bei dem Magneten kann es sich dabei um einen permanenten Magneten oder auch um einen Elektromagneten handeln.

Bei einer weiteren vorteilhaften Ausführungsform sind eine Strömungsverbindung zwischen der ersten Abführleitung und dem Verteilraum und eine Strömungsverbindung zwischen der zweiten Abführleitung und dem Verteilraum voneinander beabstandet. Vorteilhaft ist der Abstand größer als der Radius eines Ventilkörpers und besonders bevorzugt größer als der Durchmesser des Ventilkörpers, insbesondere wenn der Ventilkörper als Kugel ausgebildet ist. Auf diese Weise wird erreicht, dass, wenn eine der beiden Zuführleitungen durch den Ventilkörper verschlossen ist, die Strömung der Flüssigkeit durch die andere Zuführleitung nicht durch den Ventilkörper behindert wird.

Auch die beiden Abführleitungen sind bevorzugt wenigstens abschnittsweise voneinander beabstandet. Bei einer weiteren vorteilhaften Ausführungsform ist auch das magnetische Element gegenüber dem Verteilraum bewegbar. So kann durch eine Bewegung des magnetischen Elements außerhalb des Verteilraums auch eine Bewegung des Ventilkörpers innerhalb des Verteilraums erreicht und damit die Vorrichtung in unterschiedliche Schaltstellungen gebracht werden. Es wäre jedoch auch möglich, dass die Fluidverbindung der ersten Abführleitung mit dem Verteilraum und die Fluidverbindung der zweiten Abführleitung mit dem Verteilraum ineinander übergehen und der Ventilkörper nur einen Teil der sich so bildenden gesamten Strömungsverbindung abdecken kann.

Es wäre jedoch auch denkbar, dass mehrere - insbesondere schaltbare Magnete wie Elektromagnete - vorgesehen sind und durch eine entsprechende Beschaltung der Ventilkörper in unterschiedliche Stellungen gebracht werden kann. Bei einer weiteren vorteilhaften Ausführungsform ist der Ventilkörper auch zum wenigstens teilweise Verschließen der anderen Abführleitung geeignet. In dieser Ausführungsform kann wahlweise durch den Ventilkörper die eine oder die andere Abführleitung verschlossen werden. Weiterhin wäre es auch denkbar, dass der Ventilkörper zusätzlich oder alternativ zum Schließen der Zuführleitung geeignet ist. In diesem Falle könnte das Ventil geöffnet und geschlossen und auch mit zwei unterschiedlichen Strömungsquerschnitten betrieben werden.

Vorteilhaft kann sich der Ventilkörper innerhalb des Verteilraums bzw. Produktraums in axialer Richtung bewegen.

Bei einer weiteren vorteilhaften Ausführungsform weisen die Abführleitungen wenigstens abschnittsweise einen unterschiedlichen Strömungsquerschnitt auf. Dabei kann dieser unterschiedliche Strömungsquerschnitt bereits an der Strömungsverbindung mit dem Verteilraum vorliegen, es wäre jedoch auch eine spätere Verengung des Strömungsquerschnitts denkbar. Auf diese Weise lassen sich zwei unterschiedliche Durchtrittsgeschwindigkeiten realisieren. So ist es möglich, dass neben einer Hauptrohrleitung zusätzlich ein Bypass angeordnet ist, wobei der Ventilkörper wie oben erwähnt in zwei oder auch mehrere Positionen gebracht werden kann.

So kann in einer ersten Position des Ventilkörpers beispielsweise die erste Abführleitung bzw. die Hauptleitung offen sein, bzw. der Ventilkörper weit genug von der Öffnung beabstandet sein, sodass das Produkt bzw. die Flüssigkeit schnell durch die Vorrichtung, d. h. die Drossel fließen kann. Falls der Ventilkörper in diesem Falle auch noch von der Öffnung der zweiten Abführleitung beabstandet ist, kann das Produkt sowohl durch die Hauptleitung als auch durch die Drosselbohrung bzw. den Bypass strömen. In einer zweiten Position kann der Ventilkörper beispielsweise die erste Zuführleitung, d. h. die Hauptleitung verschließen, sodass die Flüssigkeit nur noch durch den Bypass bzw. die Drosselbohrung fließen kann.

Bei einer weiteren vorteilhaften Ausführungsform bildet der Verteilraum bzw. eine Innenwandung eines Verteilraums eine Lauffläche für den Ventilkörper aus. Dies bedeutet, dass der Ventilkörper entlang dieser Lauffläche verschoben werden kann bzw. abrollt, um beispielsweise eine Abführleitung zu verschließen oder zu öffnen.

Bei einer weiteren vorteilhaften Ausführungsform ist der Ventilkörper ein Kugelkörper. Der Vorteil in der Verwendung eines Kugelkörpers besteht darin, dass dieser vergleichsweise leicht im Inneren des Verteilraums bewegt werden kann und weiterhin durch seine Oberfläche die Abführleitungen weitgehend verschließen kann. Besonders vorteilhaft weisen die Strömungsverbindungen zwischen den Abführleitungen und dem Verteilraum einen im Wesentlichen kreisförmigen Querschnitt auf.

Es wäre jedoch auch denkbar, dass der Ventilkörper beispielsweise zylinderförmig ausgebildet ist.

Bei einer weiteren vorteilhaften Ausführungsform weist der Verteilraum wenigstens teilweise ein nichtmagnetisches Material auf.

Bei einer weiteren vorteilhaften Ausführungsform dient der Ventilkörper zum Verändern eines von der Zuführleitung zu den Abführleitungen gelangenden Strömungsquerschnitts der Flüssigkeit. Damit dient der Ventilkörper hier insbesondere zum Drosseln des Durchflusses durch die erfindungsgemäße Vorrichtung.

Bei einer weiteren vorteilhaften Ausführungsform ist innerhalb des Verteilraums ein Aufnahmeraum zum wenigstens teilweisen Aufnehmen des Ventilkörpers angeordnet. Mit diesem Aufnahmeraum kann bewirkt werden, dass der Ventilkörper in einer Ruhestellung die Strömung der Flüssigkeit durch den Verteilraum nicht behindert.

Dabei ist es auch möglich, dass der Ventilkörper in einer Position weder die erste Abführleitung noch die zweite Abführleitung abdeckt. Bei dieser Ausführungsform sind drei unterschiedliche Schaltstellungen der erfindungsgemäßen Vorrichtung und damit auch drei unterschiedliche Füllgeschwindigkeiten denkbar.

Die vorliegende Erfindung ist weiterhin auf eine Vorrichtung zum Abfüllen von Flüssigkeiten und insbesondere von Getränken in Behältnisse gerichtet, wobei diese Vorrichtung eine Fülleinrichtung aufweist, welche die Behältnisse mit der Flüssigkeit befüllt und wenigstens eine in einer Strömungsrichtung der Flüssigkeit stromaufwärts bezüglich der Fülleinrichtung angeordnete Vorrichtung zum Fördern von Flüssigkeiten der oben beschriebenen Art.

Weitere Vorteile und Ausführungsformen ergeben sich aus den beigefügten Zeichnungen. Darin zeigen:
- Fig. 1: eine Vorrichtung zum Befüllen von Behältnissen nach dem Stand der Technik;
- Fig. 2a, 2b: zwei schematische Darstellungen einer erfindungsgemäßen Vorrichtung in einer ersten Ausführungsform;
- Fig. 3a, 3b: Darstellungen einer erfindungsgemäßen Vorrichtung in einer zweiten Ausführungsform;
- Fig. 4: eine schematische Darstellung einer erfindungsgemäßen Vorrichtung in einer dritten Ausführungsform; und
- Fig. 5a - 5d: vier Darstellungen einer erfindungsgemäßen Vorrichtung.

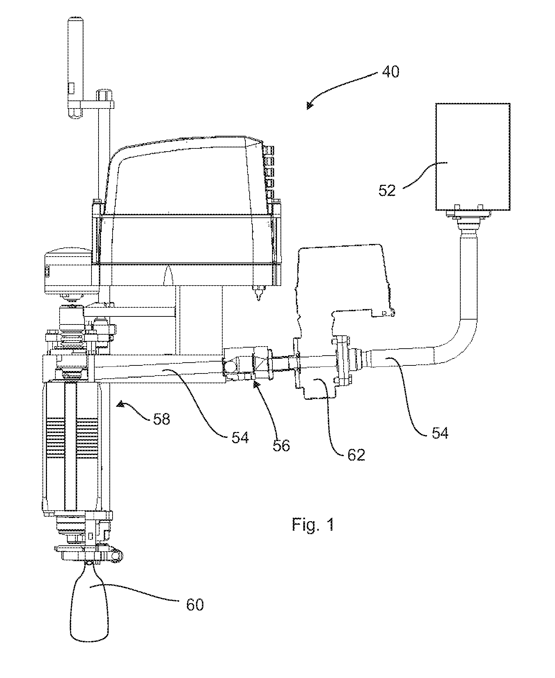

Fig. 1 zeigt eine Gesamtdarstellung einer Vorrichtung 40 zum Befüllen von Behältnissen nach dem Stand der Technik. Dabei bezieht sich das Bezugszeichen 52 auf ein (nur schematisch dargestelltes) Aufbewahrungsbehältnis, von welchem aus über eine Transportleitung 54 das Medium bzw. das Getränk in die Behältnisse 60 abgefüllt wird. Das Bezugszeichen 58 bezieht sich auf eine Einfülleinrichtung, welche die Flüssigkeit in die Behältnisse 60 einfüllt. In der Transportleitung 54 kann eine erfindungsgemäße Drosseleinrichtung für die Flüssigkeit vorgesehen sein. Das Bezugzeichen 62 kennzeichnet eine Durchflussmesseinrichtung. Mittels einer Ventileinrichtung 56 kann der Zufluss der Flüssigkeit zu der Einfülleinrichtung 58 gesteuert werden.

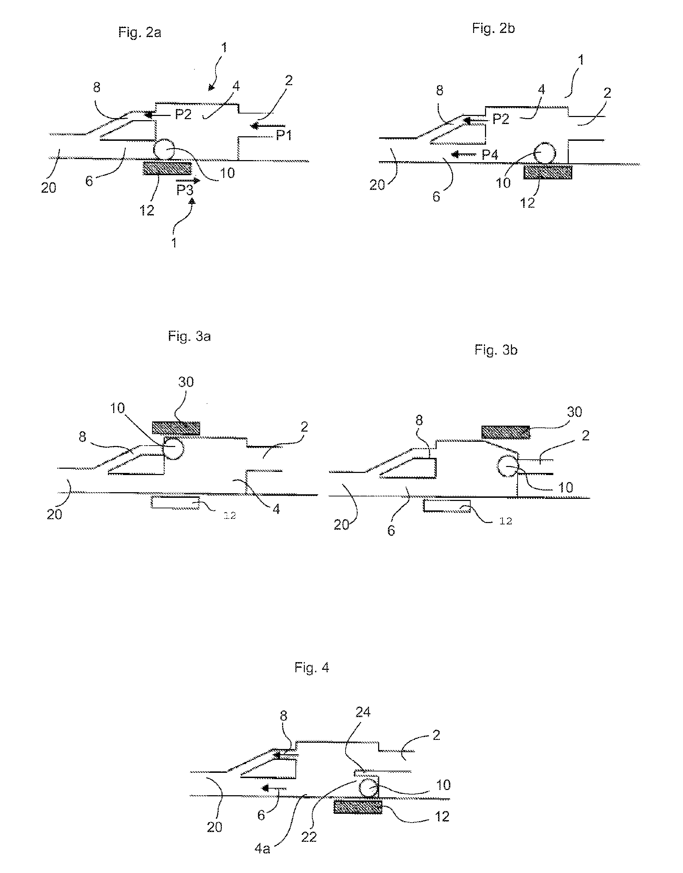

Die Figuren 2a und 2b zeigen zwei schematische Darstellungen einer erfindungsgemäßen Vorrichtung in zwei unterschiedlichen Schaltpositionen. Dabei ist eine Zuführleitung 2 vorgesehen, über welche entlang des Pfeils P1 Flüssigkeit in einen Verteilraum 4 geführt wird. An diesem Verteilraum 4 schließen sich eine erste Abführleitung 6 und eine zweite Abführleitung 8 an. Die erste Abführleitung 6 weist dabei, wie in den Figuren 2a und 2b erkennbar, einen größeren Strömungsquerschnitt auf, als die zweite Abführleitung 8. Die Flüssigkeit wird daher in Richtung der Pfeile P2 und P4 (vgl. Fig. 2b) abgeführt.

Innerhalb des Verteilraums 4 ist weiterhin ein Ventilkörper 10 in Form einer Kugel angeordnet, der gegenüber dem Verteilraum 4 beweglich ist. Dabei ist jedoch der Querschnitt dieses Ventilkörpers so gewählt, dass dieser nicht durch den Zulauf oder einen der Abläufe aus dem Verteilraum austreten kann. Das Bezugszeichen 20 bezieht sich auf eine Hauptabführleitung für die Flüssigkeit. Der Querschnitt der Zuführleitung 2 und der beiden Abführleitungen 6, 8 ist daher bevorzugt kleiner als derjenige der Kugel 10.

Außerhalb des Verteilraums 4 ist ein magnetisches Element 12 beispielsweise ein Permanentmagnet oder ein Elektromagnet angeordnet. Dieses magnetische Element ist hier entlang des Pfeils P3 gegenüber dem Verteilraum 4 verschiebbar. Bei der in Fig. 2a gezeigten Situation verschließt der Ventilkörper 10 die erste Abführleitung 6. Damit kann die Flüssigkeit lediglich durch die zweite Abführleitung 8 aus dem Verteilraum gelangen.

Bei der in Fig. 2b gezeigten Situation wurde der Magnet 12 nach rechts verschoben und damit werden die beiden Abführleitungen 6 und 8 für den Durchtritt der Flüssigkeit freigegeben.

Damit kann die Kugel 10 hier durch den Magneten 12 derart in Stellung gebracht werden, dass entweder ein Durchflussbereich mit kleinem Querschnitt (vgl. Fig. 2a) oder ein Durchflussbereich mit kleinem Querschnitt und ein Durchflussbereich mit großem Querschnitt frei ist. Auf diese Weise sind zwei unterschiedliche Drosselstellungen der Vorrichtung 1 möglich. Eine Verschiebung des Magneten 12 ist dabei manuell oder auch durch entsprechende Stellantriebe (pneumatisch, elektromotorisch etc.) möglich. Bevorzugt ist der Stellantrieb als Elektromotor ausgebildet, beispielsweise als Schrittmotor oder Linearservomotor. Dadurch kann die Drosselstellung in jeder beliebigen Position eingestellt werden. Weiterhin ist hier erkennbar, dass die Zuführleitung 2 gegenüber der ersten Abführleitung 6 in der Höhe versetzt ist. Auf diese Weise kann erreicht werden, dass, wenn sich die Kugel 10 in der in Fig. 2b gezeigten rechten Position befindet, der Durchfluss der Flüssigkeit durch den Verteilraum durch die Kugel nicht behindert wird, und andererseits auch die Gefahr verringert wird, dass der Ventilkörper 10 bzw. die Kugel von der Strömung gegen die Kraft des Magneten 12 mitgerissen wird.

Die Fig. 3a und 3b zeigen eine weitere Ausführungsform der erfindungsgemäßen Vorrichtung. Bei dieser Ausführungsform ist zusätzlich ein zweiter Magnet 30 vorgesehen, sodass auch eine dritte Position angefahren werden kann bzw. der Ventilkörper 10 auch nur die zweite Abführleitung 8 verschließen kann. Auf diese Weise ist es möglich, dass nicht nur die Abführleitung 6 oder die Abführleitungen 6 und 8 geöffnet sein können, sondern entweder die Zuführleitung 6 oder die Abführleitung 6 oder die Abführleitungen 6 und 8.

Dies könnte auch dadurch realisiert werden, dass es sich bei dem Magneten 12, 30 um Elektromagnete handelt, die entsprechend angesteuert werden. Daneben wäre es auch möglich, auf den zweiten Magneten 30 zu verzichten, wenn die Kugel und der erste Magnet 12 derart aufeinander abgestimmt sind, dass mit unterschiedlichen Polaritäten wahlweise eine Abstoßungskraft oder eine Anziehungskraft erzeugt werden kann.

Weiterhin wäre es auch denkbar, dass auch der zweite Magnet 30 verfahrbar ist, wie in Fig. 3b veranschaulicht. Dabei ist zusätzlich eine vierte Position erreichbar, in der der Ventilkörper 10 die Zuführleitung 2 und damit das Ventil schließt.

Fig. 4 zeigt eine weitere Ausführungsform einer erfindungsgemäßen Vorrichtung. Man erkennt, dass innerhalb des Verteilraums hier zusätzlich eine Wandung 24 vorhanden ist, sodass ein Aufnahmeraum 22 ausgebildet wird, in den der Ventilkörper 10 eintreten kann. Auf diese Weise kann so eine strömungstechnische Optimierung erreicht werden, wenn die Kugel 10 in einer voll geöffneten Position unter der Abdeckung 24 verschwindet.

Weiterhin wäre es auch möglich, dass das Ventil bzw. der Verteilraum 4 in Form eines Zylinders ausgebildet ist. Bei einer derartigen Ausführungsform reicht zur Einstellung der Position der Kugel ein Elektromagnet, der an der Außenwand dieses Zylinders entlangfahren kann. Man erkennt weiterhin, dass die untere Wandung 4a des Verteilraums, anders als in Fig. 4 gezeigt, vorteilhaft unterhalb der ersten Abführleitung 6 angeordnet ist, damit die Kugel die Abführleitung 6 verschließen kann. Weiterhin wäre es auch möglich, dass an der Innenwandung des Verteilraums 4a jeweils Schrägflächen bzw. Einführschrägen vorgesehen sind, sodass die Kugel auf diese Weise wie in einem Ventilsitz sitzt, und die jeweiligen Abführleitungen 6 und 8 verdecken kann.

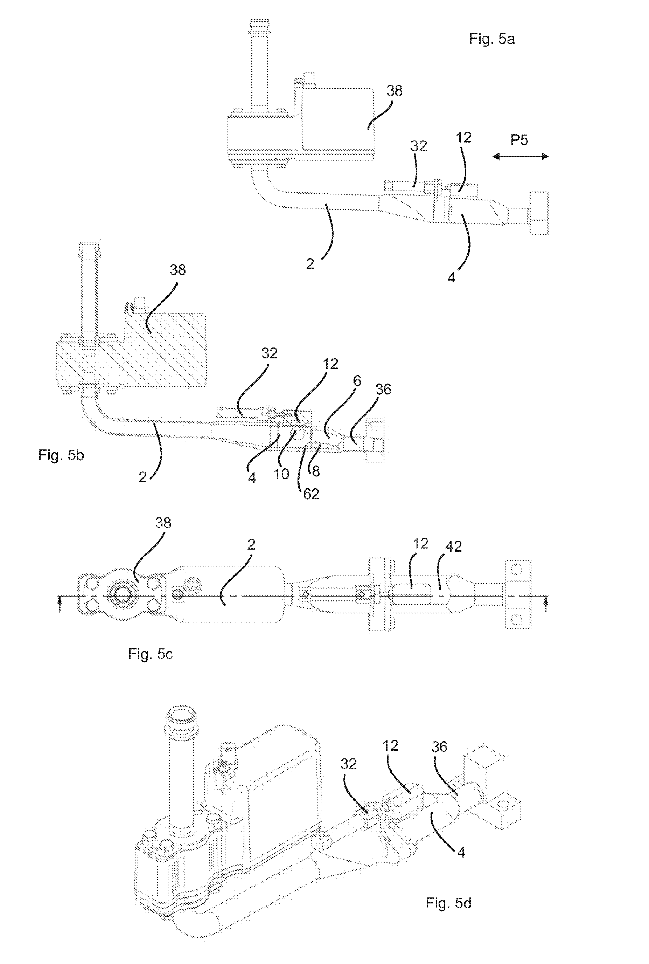

Die Fig. 5a - 5d zeigen vier detailiertere Darstellungen einer erfindungsgemäßen Vorrichtung. Dabei ist wieder die Zuführleitung 2 gezeigt, die in den Verteilraum 4 mündet. Das Bezugszeichen 38 bezieht sich auf eine Durchflussmesseinrichtung. Das Bezugszeichen 32 kennzeichnet eine Antriebseinrichtung, die zum Bewegen des Magneten 12 entlang des Doppelpfeils P5 dient. Dabei kann es sich beispielsweise um eine pneumatische Antriebseinrichtung handeln.

Durch eine Bewegung des Magneten kann die Kugel 10 im Inneren des Verteilraums (vgl. Fig. 5b) ebenfalls bewegt werden. Je nach Position des Magneten 12 und damit auch der Kugel, kann hier wahlweise die erste Abführleitung 6 oder die zweite Abführleitung 8 verschlossen werden (oder auch beide Abführleitungen 6, 8 offen gelassen werden). Das Bezugszeichen 36 kennzeichnet eine Sammelleitung, in welche sowohl die Abführleitung 6 als auch die Abführleitung 8 mündet.

Der Magnet 12 ist hier innerhalb einer Führung 42 bewegbar. Das Bezugszeichen 62 (Fig. 5b) kennzeichnet eine Anlagefläche, an der die Kugel 10 anliegt, wenn sie die zweite Abführleitung 8 verschließt. Ein Krümmungsradius dieser Fläche ist hier bevorzugt an einen Krümmungsradius der Kugel 10 angepasst

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Zuführleitung
- 4: Verteilraum, Ventilraum
- 6: erste Abführleitung
- 8: zweite Abführleitung
- 10: Ventilkörper, Kugel
- 12: magnetisches Element, Magnet
- 20: Hauptabführleitung
- 22: Aufnahmeraum
- 24: Wandung, Abdeckung
- 30: Magnet
- 32: Antriebseinrichtung
- 36: Sammelleitung
- 38: Durchflussmesseinrichtung
- 40: Vorrichtung zum Abfüllen von Flüssigkeiten in Behältnisse
- 42: Führung
- 52: Aufbewahrungsbehältnis
- 54: Transportleitung
- 56: Ventileinrichtung
- 58: Einfülleinrichtung
- 60: Behältnis
- 62: Anlagefläche
- P1, P2: Pfeil
- P3, P4: Pfeil
- P5: Pfeil

## Patentansprüche

1. Vorrichtung (1) zum Fördern von Flüssigkeiten und insbesondere von Getränken mit einer Zuführleitung (2), welche in Strömungsverbindung mit einem Verteilraum (4) für die Flüssigkeit steht und welche die Flüssigkeit zu dem Verteilraum (4) fördert, mit einer ersten Abführleitung (6), welche in Strömungsverbindung mit dem Verteilraum (4) steht und welche die Flüssigkeit von dem Verteilraum (4) abfördert, mit einer zweiten Abführleitung (8), welche in Strömungsverbindung mit dem Verteilraum (4) steht und welche die Flüssigkeit von dem Verteilraum (4) abfördert,
**dadurch gekennzeichnet, dass**
in dem Verteilraum (4) ein Ventilkörper (10) angeordnet ist, wobei der Ventilkörper (10) ein magnetisierbares Material aufweist und gegenüber dem Verteilraum (4) bewegbar ist, und wobei der Ventilkörper (10) geeignet zum wenigstens teilweise Verschließen wenigstens einer Abführleitung (6, 8) ist und wobei außerhalb des Verteilraums (4) ein magnetisches Element (12) zum Bewegen des Ventilkörpers (10) vorgesehen ist.

2. Vorrichtung nach Anspruch 1,
**dadurch gekennzeichnet, dass**
eine Strömungsverbindung zwischen der ersten Abführleitung (6) und dem Verteilraum (4) und eine Strömungsverbindung zwischen der zweiten Abführleitung (8) und dem Verteilraum (4) voneinander beabstandet sind.

3. Vorrichtung (1) nach Anspruch 1,
**dadurch gekennzeichnet, dass**
das magnetische Element (12) gegenüber dem Verteilraum (4) bewegbar ist.

4. Vorrichtung (1) nach wenigstens einem der vorangegangenen Ansprüche,
**dadurch gekennzeichnet, dass**
der Ventilkörper (10) auch zum wenigstens teilweise Verschließen der anderen Abführleitung (8, 6) geeignet ist.

5. Vorrichtung (1) nach wenigstens einem der vorangegangenen Ansprüche,
**dadurch gekennzeichnet, dass**
die Abführleitungen wenigstens abschnittsweise einen unterschiedlichen Strömungsquerschnitt aufweisen.

6. Vorrichtung (1) nach wenigstens einem der vorangegangenen Ansprüche,
**dadurch gekennzeichnet, dass**
der Verteilraum (4) eine Lauffläche für den Ventilkörper (10) ausbildet.

7. Vorrichtung (1) nach wenigstens einem der vorangegangenen Ansprüche,
**dadurch gekennzeichnet, dass**
der Ventilkörper (10) ein Kugelkörper (10) ist.

8. Vorrichtung (1) nach wenigstens einem der vorangegangenen Ansprüche,
**dadurch gekennzeichnet, dass**
der Ventilkörper zum Verändern eines von der Zuführleitung (2) zu den Abführleitungen (6, 8) gelangenden Strömungsquerschnitts der Flüssigkeit dient.

9. Vorrichtung (1) nach wenigstens einem der vorangegangenen Ansprüche,
**dadurch gekennzeichnet, dass**
innerhalb des Verteilraums (4) ein Aufnahmeraum (22) zum wenigstens teilweise Aufnehmen des Ventilkörpers angeordnet ist.

10. Vorrichtung (40) zum Abfüllen von Flüssigkeiten und insbesondere von Getränken in Behältnisse mit einer Fülleinrichtung, welche die Behältnisse mit der Flüssigkeit befüllt und mit wenigstens einer in einer Strömungsrichtung der Flüssigkeit stromaufwärts bezüglich der Fülleinrichtung angeordneten Vorrichtung (1) zum Fördern von Flüssigkeiten nach wenigstens einem der vorangegangenen Ansprüche 1 ― 9.
